# EUROPÄISCHE PATENTSCHRIFT

(11) **EP 0 447 366 B1**
(45) Veröffentlichungstag und Bekanntmachung des Hinweises auf die Patenterteilung: **03.09.1997**
(21) Anmeldenummer: 91810169.2
(22) Anmeldetag: 14.03.1991
(51) Int. Cl.: B01J 20/28, A01K 1/015

(54) **Granulat sowie Verfahren zu seiner Herstellung**
Granules and a process for their production
Granulés ainsi qu'un procédé pour leur fabrication

(30) Priorität: 16.03.1990 DE 4008524; 06.09.1990 CH 2893/90
(43) Veröffentlichungstag der Anmeldung: 18.09.1991
(73) Patentinhaber: HARD AG, 8604 Volketswil (CH)
(72) Erfinder: Frey, Alfred, CH-1470 Estavayer-le-Lac (CH)
(74) Vertreter: Troesch Scheidegger Werner AG

(56) Entgegenhaltungen:
- DE-A- 1 269 752
- DE-A- 3 514 806
- DE-A- 3 644 826
- DE-A- 3 707 473
- DE-A- 3 816 225
- US-A- 4 409 925
- US-A- 4 676 196

## Beschreibung

Die Erfindung betrifft ein Granulat, insbesondere ein Tierestreugranulat, gemäss den Oberbegriff des Anspruchs 6 sowie ein Verfahren zur Granulatherstellung gemäss dem Oberbegrif des Anspruchs 1.

Ein derartiges Granulat und ein derartiges Verfahren sind aus der DE 38 16 225 A1 bekannt. Dort wird ein Zellulosematerial pulverisiert und mit einem ebenfalls pulverisierten mineralischen Stoff gemischt. Gemäss einem Beispiel wird die Mischung getrocknet, so dass ein pulverförmiges bis kleinstförmiges Endprodukt erhalten wird. In einem anderen Beispiel wird die Mischung mit Wasser angereichert, sodann mittels eines Schneckenkompaktierers oder einer Tablettierpresse zu wulstförmigen Trockenpartikeln bzw. Tabletten geformt, die anschliessend getrocknet werden. In wieder einem anderen Beispiel wird die mit Wasser versetzte Mischung unmittelbar getrocknet, so dass sich ein körniges bis brockenartiges Endprodukt ergibt.

Bei einem weiteren, aus DE 37 07 473 A1 bekannten Verfahren wird Abfall aus der Papierherstellung eingeweicht und der so hergestellte Papierbrei durch Pressen oder Zentrifugieren entwässert, woraufhin die Breifasern zerkleinert werden. Nach Zusatz geringer Mengen von Additiven, insbesondere Farbstoffen, Bioziden o. dgl., werden mittels eines Trommel- oder Scheiben-Tablettenformers, Extruders oder Granulators kugelförmige Körnchen geformt, die anschliessend abgeplattet werden. Das getrocknete Produkt ergibt ein Granulat, das auch als Tierstreugranulat verwendbar ist.

Aus DE 33 43 965 C1 ist es weiterhin bekannt, ein Gemisch aus organischen Fasern, natürlichen und/oder synthetischen Mineralstoffen und Wasser zu pressen, die so gewonnene plastische Masse nach teilweiser oder vollständiger Aushärtung der Mineralstoffe zu trocknen und die getrocknete Masse fein zu zerkleinern, so dass ein streu- und schwimmfähiges Mischprodukt erhalten wird, das sich insbesondere zum Aufsaugen und Binden von Oelen eignen soll.

Aus DE 35 14 806 A1 ist ein im wesentlichen aus agglomerierten Fasern eines faserigen, cellulosischen Materials bestehendes Teilchen bekannt, welches eine verdichtete äussere Oberfläche besitzt, welche frei von vorstehenden Fibrillen ist. Dabei wird beschrieben, dass die innere Struktur der Teilchen durch den Herstellungsprozess geschichtet oder lamellenartig ausgebildet wird, d.h. durch den Herstellungsprozess verändert wird. Bevorzugterweise wird das Teilchen flachgedrückt.

Aus US 4 676 196 ist ein getrocknetes Granulat bekannt, welches aus wenigstens fünf Komponenten besteht, und welches nach einem Mischungs- und Agglomerationsschritt getrocknet wird. Dabei wird insbesondere darauf hingewiesen, dass alle aufgeführten Komponenten für die Herstellung eines als Tierstreu zu verwendenden Granulats vorhanden sein müssen.

Der Erfindung liegt die Aufgabe zugrunde, ein insbesondere als Tierstreu geeignetes Granulat, welches hauptsächlich nur aus Zellulosefasern und einem mineralischen Stoff bestehen soll, das in höchstem Mass saugfähig ist, ohne beim Einsatz an den Tieren hängenzubleiben, sowie ein Verfahren und eine Vorrichtung zur Herstellung eines solchen Granulates anzugeben.

Die erfindungsgemässe Lösung dieser Aufgabe ist in den Ansprüchen 1 bzw. 6 angegeben. Bei dem erfindungsgemäss erzeilten Granulat sind die einzelnen Granülen nur oberflächenkompaktiert, so dass ihre Porosität im Innern aufrechterhalten bleibt, was für die gewünschte hohe Saugfähigkeit massgeblich ist. Gleichzeitig sorgt die kompaktierte und verrundete Oberfläche der Granülen dafür, dass diese bei der Benutzung nicht an den Tieren hängenbleiben und verschleppt werden.

Bevorzugterweise umfassen die Zellulosefasern gemäss Anspruch 2, als eine der wesentlichen Komponenten des erfindungsgemässen Granulates, Papierfasern, insbesondere Zeitungspapierfasern, und zwar bevorzugterweise zu einem überwiegenden Anteil, wenn nicht die Fasern gar ausschliesslich aus Papierfasern, insbesondere Zeitungspapierfasern, gebildet sind.

Dies hat den wesentlichen Vorteil, dass für die Bereitstellung der Zellulosefasern Altpapier, insbesondere Altzeitungspapier, eingesetzt werden kann, womit eine sinnvolle Weiterverwendung solchen Papiers ermöglicht wird, in Anbetracht der Tatsache, dass für die Kleintierhaltung heute sehr grosse Mengen an Tierstreu verwendet werden.

Gemäss Wortlaut von Anspruch 3 kann dabei ein solcher mineralischer Stoff auch Bariumsulfat umfassen.

Durch die Verwendung von Kalzium-Silikat-Hydrat wird es weiterhin möglich, den in grossen Mengen anfallenden Bruch-Gasbeton sinnvoll weiter zu verwenden. Durch den Verbund mit den erwähnten Zellulosefasern ergibt das Kalzium-Silikat-Hydrat-Pulver ein Granulat, das nach der Verwendung als Tierstreu gut abbaubar ist und das die Nachteile bekannten Gasbeton-Sandes als Tierstreu nicht mehr aufweist.

Unter Berücksichtigung, dass, herstellungstechnisch, eine leichte Granulierung möglich sein soll, weiter im Gebrauch der Tierstreu die Staubentwicklung minimal sein sollte und zudem das Schüttgewicht der Streu nicht zu gering sein sollte, damit Tiere die Streu nicht ohne weiteres auswerfen können, wird erfindungsgemäss vorgeschlagen, die Granülen aus 40 bis 60Gew% Fasern zu bilden.

Bei Verwendung anderer Faserstoffe oder mineralischer bzw. organischer Stoffe in Pulverform können sich andere Zusammensetzungsverhältnisse als optimal ergeben.

Gemäss Wortlaut von Anspruch 4 kann weiter dem erfindungsgemässen Granulat ein Desinfektionsmittel und/oder ein Duftstoff zugefügt sein.

Anstelle oder zusätzlich zu mineralischen Stoffen hat sich gezeigt, dass sich auch organische Stoffe teilweise ausserordentlich gut eignen, um mit den Fasern erfindungsgemäss das Granulat, insbesondere für Tierstreu, zu bilden und dabei, nach Anspruch 1, insbesondere Holzmehl. Auch dieses Produkt steht aus der holzverarbeitenden Industrie in grossem Mengen als Abfallprodukt zur Verfügung. Die mit Holzmehl hergestellten erfindungsgemässen Granulate zeichnen sich ebenfalls durch eine hohe Saugfähigkeit aus und sind ebenso wie die obgenannten vollständig abbaubar.

Das erfindungsgemässe Verfahren zur Herstellung eines Tierstreugranulates zeichnet sich nach dem Wortlaut von Anspruch 1 aus.

Erfindungsgemäss ergibt sich dadurch ein höchst einfaches Vorgehen, indem Papier, insbesondere Zeitungspapier, unter Zugabe des Wassers und des Pulvers zerfasert und gleichzeitig mit dem Pulver gemischt wird. Das Zerfasern von Papier ist aus der papierverarbeitenden Industrie schon lange bekannt und wird beispielsweise für die Herstellung von Recycling-Papier aus Altpapier eingesetzt.

Dabei wird insbesondere bei der Verwendung von Kalzium-Silikat-Hydrat-Pulver das Pulver mit einer Korngrösse entsprechend einem Blainewert von mindestens 1000 cm2/g, nach Wortlaut von Anspruch 2, eingesetzt.

Im weiteren kann, nach dem Wortlaut von Anspruch 3, insbesondere zum Beschweren des Granulates, Bariumsulfatpulver mit den Fasern gemischt werden, wie beispielsweise zusammen mit Kalzium-Silikat-Hydrat-Pulver, dabei letzteres mit überwiegendem Anteil.

Während des Mischvorganges kann weiter der feuchten Masse ein Duft- und/oder Desinfektionsstoff beigemischt werden.

Ein optimales Granulat, was Staubentwicklung, Schüttgewicht, Saugfähigkeit anbelangt, wird bei Vorgehen nach Anspruch 5 realisiert.

Eine Vorrichtung zur Herstellung von erfindungsgemässem Tierstreugranulat wird jetzt beschrieben.

Dabei wird, dem Wortlaut von Ansprüchen 1 und 5 folgend, bei der Verwendung von Papierfasern die Mischstufe mit einem bekannten Zerfaserer ausgerüstete der vorzugsweise gerade die Mischstufe bildet.

Die an der Vorrichtung vorgesehene Granulierstufe weist bevorzugterweise eine Trommel auf mit umlaufender Achse, woran Zerkleinerungsorgane vorgesehen sind. Die Achse ist dabei vorzugsweise exzentrisch angeordnet.

Diese sind, in einer bevorzugten Ausführungsvariante, als Klingen, die eine Förderschneckenfläche aufspannen, ausgebildet oder, in höchst einfacher Art und Weise als flexible, fadenartige Peitschorgane. In beiden Fällen sind die Trommel und die Achse drehgelagert mit gegenläufig wirkenden Drehantrieben verbunden.

Dadurch wird erreicht, dass einerseits die der Trommel zugespiesene feuchte Masse durch die Zerkleinerungsorgane zerkleinert wird und dass die an der Peripherie der Trommel liegenden Masseteilchen mit der Trommelbewegung immer wieder hochgefördert werden und wieder zurückfallen, womit eine zunehmende Kompaktierung der Teilchenoberflächen bezüglich ihres Innern erreicht wird, bei Erhalt ihrer Volumensaugfähigkeit.

Bevorzugterweise, und um diesen Effekt zu unterstützen, weist, die Trommelinnenwandung radial einragende Mitnehmerschaufeln auf.

Durch Neigung der Trommel wird eine schwerkraftgetriebene Vorförderung des im Entstehen begriffenen Granulates mit höchst einfachen Mitteln sichergestellt, wobei, bei Trommelbeheizung vorzugsweise mit Warmluft, eine gleichzeitige Antrocknung der Granülenoberfläche erreicht wird, was weiter die angestrebte Oberflächenkompaktierung fördert.

In einer weiteren Ausbildungsvariante der Granulierstufe umfasst letztere einen Zerkleinerer mit ausgangsseitiger Lochsiebanordnung und vorgeschaltetem Pressorgan für die feuchte Masse, wie z.B. mit einer Schnecke. Dadurch wird die feuchte Masse durch die Lochsiebanordmung durchgepresst, ausgangsseitig erscheint eine Vielzahl im wesentlichen ununterbrochener oder zufällig brechender Würstchen der feuchten Masse.

Nun ist der Lochsiebanordmung nachgeschaltet, eine Portionieranordnung vorgesehen, wie ein hin und her pendelndes Messer, womit die erwähnten Würstchen in Granulatteilchen getrennt werden. Darnach ist ein bekannter Granulierteller vorgesehen, z.B. ein Granulierteller, wie er von der Firma Beumer, Beckum (D), hergestellt und vertrieben wird. Dort werden die Teilchen optimal gerundet und darnach in eiiner Trocknungsstufe, wie einem Bandtrockner, getrocknet, womit wiederum eine Oberflächenkompaktierung entsteht.

Die Erfindung wird anschliessend beispielsweise anhand von Figuren erläutert.

Es zeigen:
- Fig. 1: ein Funktionsblockdiagramm einer erfindungsgemässen Anlage zur Erläuterung des grundsätzlichen Herstellungsverfahrens des erfindungsgemässen Granulates,
- Fig. 2a: schematisch einen Längsschnitt durch einen beim erfindungsgemässen Einsatz von Papier eingesetzten, an sich bekannten Zerfaserer,
- Fig. 2b: einen schematischen Querschnitt durch einen Zerfaserer gemäss Fig. 2a,
- Fig. 3a: einen schematischen Längsschnitt durch eine erfindungsgemäss aufgebaute Granulierstufe,
- Fig. 3b: schematisch einen querschnitt durch die Granulierstufe gemäss Fig. 3a,
- Fig. 3c: eine Seitenansicht einer an der Anordnung nach den Fig. 3a, 3b bevorzugterweise eingesetzten Einrichtung,
- Fig. 4: schematisch eine weitere Ausführungsvariante einer erfindungsgemäss aufgebauten Granulierstufe.

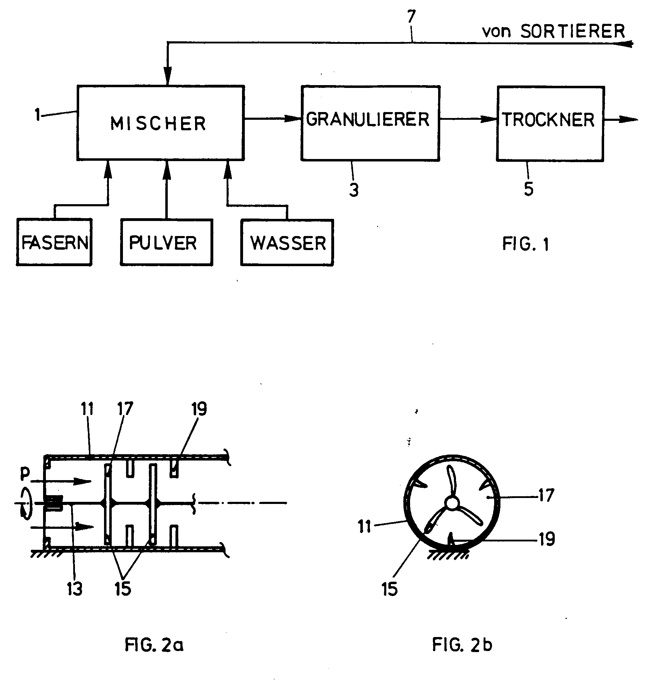

In Fig. 1 ist anhand eines Funktionsblockdiagrammes der prinzipielle Aufbau einer erfindungsgemäss eingesetzten Anlage zur Herstellung des erfindungsgemässen Tierstreugranulates dargestellt.

Einer Mischstufe 1 werden einerseits Zellulosefasern, anderseits Pulver eines mineralischen Stoffes und/oder eines organischen Stoffes zugeführt und unter Zusatz von Wasser darin gemischt. Die feuchte Masse, die daraus in der Mischstufe 1 bereitgestellt wird, wird einer Granulierstufe 3 zugeführt, worin die Masse in zu granulierende Teilchen portioniert wird und diese granuliert werden. Darnach werden die nun gerundeten Granülen in einer Trocknungsstufe 5 getrocknet.

Ausgangsseitig der Trocknungsstufe 5 wird das fertige Granulat gegebenenfalls einer Sortiererstufe zugeführt, worin Granülen zu kleiner oder zu grosser Korngrösse ausgeschieden werden und über einen Rückführpfad 7 wieder der Mischstufe 1 zugeführt werden.

Die Granülen, die im vorgegebenen Korngrössenbereich liegen, werden zur Verpackung weitergefördert.

Als Zellulosefasern werden bevorzugterweise Altpapier-, und dabei insbesondere Altzeitungspapierfasern eingesetzt, als Pulver bevorzugterweise Kalzium-Silikat-Hydrat-Pulver, wobei aber auch Pulver von Karbonaten der Erdalkalimetalle oder anderer umweltgerechter und unschädlicher mineralischer Stoffe eingesetzt werden können, gegebenenfalls in einer erwünschten Kombination. Auch Bariumsulfatpulver kann eingesetzt werden, dies insbesondere als Zusatz zum Beschweren des Granulates.

Unter Zusatz von Wasser wird das Pulver mit den Zellulosefasern intensiv gemischt, so dass sich eine feuchte, knetbare Masse bildet. Diese wird, wie vorgängig beschrieben, über die Stufen 3 und 5 weiterverarbeitet.

Durch die Dosierung von Zellulosefasern und Pulver wird am fertiggestellten Tierstreugranulat einerseits sichergestellt, dass es nicht zu leicht ist, womit es von den Tieren zu leicht ausgestreut würde, und dass es nicht zu stark Staub entwickelt. Bei zu hoher Pulverdosierung resultiert eine zu starke Staubentwicklung am Fertigprodukt, während eine zu geringe Pulverdosierung das Fertigprodukt zu leicht macht.

Die Verwendung von Altpapier als Zellulosefasern ergibt den Vorteil, dass sich durch die Wasserzugabe gegebenenfalls vorhandene Klebekomponenten des Papiers mitlösen und in der Mischstufe mitgemischt werden, wodurch zusätzlich eine Verfestigung des Granulates erreicht wird.

In einer bevorzugten Ausführungsform wurde Zeitungspapier und Kalzium-Silikat-Hydrat-Pulver mit folgenden Mengenverhältnissen gemischt:
40 bis 60% Zeitungspapier
60 bis 40% Kalzium-Silikat-Hydrat-Pulver.

Die Korngrösse des Kalzium-Silikat-Hydrat-Pulvers lag bei einem Blainewert von mindestens 1000 cm2/g. Damit wurde ein Tierstreugranulat mit einem Schüttgewicht von 320 bis 420 kg/m3 realisiert, das, bezüglich Staubentwicklung wie auch bezüglich Gewicht, sich in Versuchen als sehr gut geeignet zeigte.

Anstelle der erwähnten Pulver mineralischer Stoffe hat sich auch gezeigt, dass sich Holzmehl ausserordentlich gut für den erwähnten Einsatz eignet. Sowohl mit Holzmehl, als Pulver eines organischen Stoffes, wie auch mit den erwähnten mineralischen, pulverisierten Stoffen im Zusammenhang mit Zellulosefasern, wird ein Granulat realisiert, das biologisch mindestens nahezu bis vollständig abgebaut wird, eine grosse Saugfähigkeit aufweist, wenig Staub entwikkelt, und das sich aus befallprodukten, wie dem erwähnten Altpapier, dem Holzmehl, dem Kalzium-Silikat-Hydrat, herstellen lässt.

Der Mischstufe 1 können gegebenenfalls auch Desinfektionsmittel und/oder Duftstoffe beigemischt werden. Bereits ohne Duftstoffe hat insbesondere das aus Zeitungen und Kalzium-Silikat-Hydrat-Pulver gefertigte Granulat sich durch eine gute Geruchsbindung ausgezeichnet.

Durch die im Detail nachfolgend noch erläuterte Granuliertechnik entstehen Granülen mit im wesentlichen runden Formen, womit ein Hängenbleiben im Tierfell weitgehend vermieden wird.

Aufgrund der bebaubarkeit des erfindungsgemässen Tierstreugranulates kann es nach seinem Gebrauch beispielsweise kompostiert werden.

Beim Einsatz von Altpapier und insbesondere von Altzeitungspapier für die Zellulosefasern hat es sich gezeigt, dass bevorzugterweise und in höchst einfacher Art und Weise ein aus der Papierindustrie an sich bekannter Zerfaserer zur Zerfaserung des Altpapiers und gleichzeitig zur Mischung der Fasern, des Pulvers und des Wassers eingesetzt wird. Obwohl diese Zerfaserer bekannt sind, sei in den Fig. 2a und 2b deren Arbeitsprinzip kurz dargestellt.

Ein solcher Zerfaserer umfasst prinzipiell ein im wesentlichen zylindrisches Gehäuse 11, worin, motorisch getrieben, eine Längsachse 13 drehgelagert ist. An der Achse 13 sind radial vorragende, messerartige Blätter 15 vorgesehen, wobei, zwischen Blattkränzen 17, Schaufeln 19 am Gehäuse 11 radial einragen. Die Blätter 15 und Schaufeln 19 weisen eine Neigung auf, so dass, wie mit den Pfeilen p dargestellt, in den Zerfaserer eingeführtes Gut axial vorgefördert wird. Dabei wird Papier zerrissen und erfindungsgemäss unter dem Einfluss von Wasser mit dem ebenfalls eingeführten Pulver gleichzeitig intensiv gemischt.

Unter Verwendung eines solchen Zerfaserers wurde eine Mischung aus 70% Wasser, 12 bis 18% Zeitungspapier und entsprechend 18 bis 12% Kalzium-Silikat-Hydrat-Pulver gefertigt und der Granulier- und Trocknungsstufe zugeführt. Es resultierte ein Fertiggranulat mit dem erwähnten Schüttgewicht von 320 bis 420 kg/m3. Das Kalzium-Silikat-Hydrat-Pulver wurde mit einem Blainewert in obgenannter Grössenordnung eingesetzt.

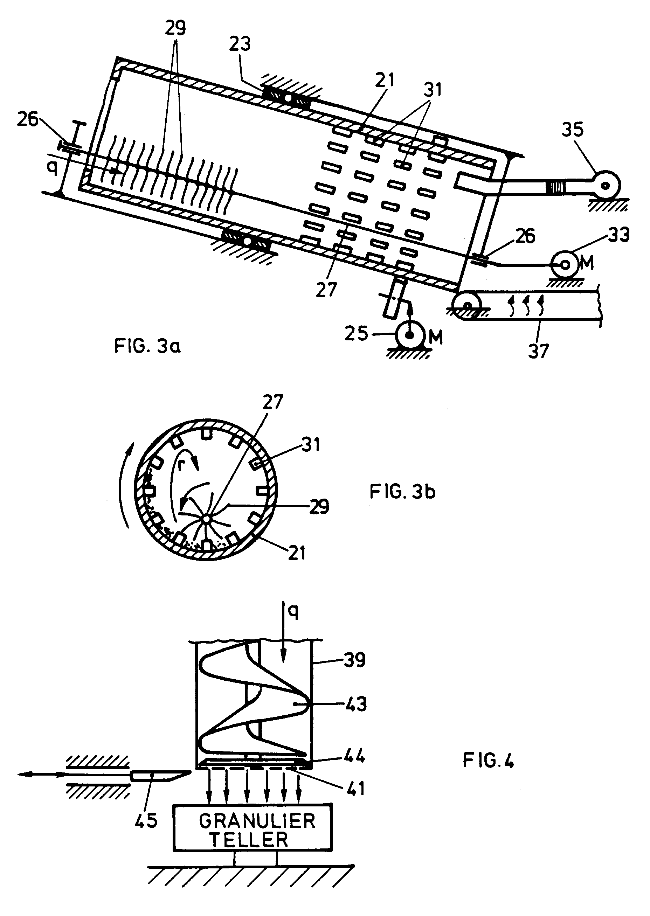

In den Fig. 3a und 3b ist schematisch eine bevorzugte Variante einer erfindungsgemäss aufgebauten und eingesetzten Granulierstufe dargestellt.

Je nach verwendeten Anlagen für die Mischstufe 1 sowie die Granulierstufe 3 kann es notwendig sein, von den obgenannten Mischverhältnissen, gegebenenfalls von der angegebenen Korngrösse abzuweichen. Entsprechendes gilt für den Einsatz anderer Pulver, wie von Holzmehlpulver, und für den Einsatz von anderen Zellulosefasern als der angegebenen Altpapier-, insbesondere Zeitungspapierfasern.

In Fig. 3a ist, wie erwähnt, schematisch und im Längsschnitt, eine erste Ausführungsvariante einer Granulierstufe 3 gemäss Fig. 1 dargestellt. Sie umfasst eine schiefgestellte Trommel 21, welche, wie schematisch mit Lagern 23 dargestellt, drehbeweglich gelagert ist. Ein Antrieb 25 treibt die Trommel 21 an. Darin liegt, auch drehbeweglich an Lagern 26 gelagert, eine Achse 27 exzentrisch, woran, in einem eingangsseitigen Abschnitt, eine Vielzahl fadenartiger Organe 29 befestigt ist. An der Innenwandung der Tonne 21 sind, in einem weiteren Abschnitt, Kränze von Mitnehmerschaufeln 31 angeordnet. Die Achse 27 mit den fadenartigen Organen 29, vorzugsweise aus einem Kunststoff, wird mit einem Antrieb 33 angetrieben. Ein Heizorgan, wie das schematisch dargestellte Heissluftgebläse 35, beheizt den Innenraum der Tonne 21.

Eingangsseitig, d.h. am hochgestellten Ende, wird von der Mischstufe 1 gemäss Fig. 1 und, im Falle des bevorzugten Einsatzes eines Zerfaserers, von letzterem die feuchte Zellulosefaser-/Pulvermasse, wie mit dem Pfeil q dargestellt, zugeführt. Die Trommel 21 wird im einen Drehsinn angetrieben, die Achse 27 im gegenläufigen Sinn. Durch Wirkung der fadenförmigen Organe 29 wird die eingeführte kompakte, feuchte Masse zerschlagen. Die Schaufeln 31, stromab vorgesehen, fördern die entstandenen, feuchten Masseteilchen, wie insbesondere aus Fig. 3b ersichtlich, mit der Wandung der Trommel 21 hoch, bis sie, schwerkraftgetrieben, wie bei r dargestellt, wieder zurückfallen.

Dadurch werden die Teilchen gerundet und oberflächlich kompaktiert. Ihre Porosität im Innern wird aufrechterhalten. Sie ist für die Saugfähigkeit des fertiggestellten Granulates massgeblich verantwortlich. Durch die eingedüste Warmluft wird die Granülenoberfläche angetrocknet und damit die runde Form der Granülen stabilisiert.

Das Granulat tritt schliesslich, wie bei s dargestellt, als abgerundetes, angetrocknetes Granulat auf eine schematisch dargestellte Trocknungseinrichtung, wie einen Bandtrockner 37.

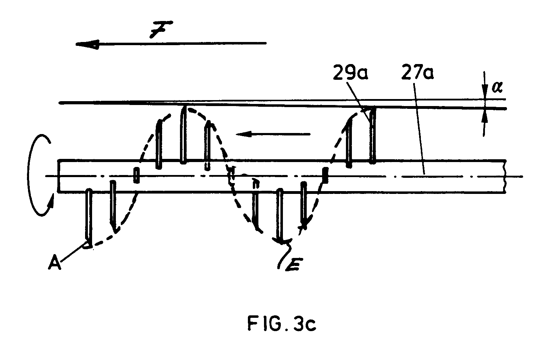

An einer bevorzugten Ausführungsvariante der bis anhin anhand der Fig. 3a und 3b beschriebenen Granulierstufe wird, wie anhand von Fig. 3c ersichtlich, Achse 27 mit den fadenförmigen Organen 29 gemäss den Fig. 3a bzw. 3b durch eine Achse 27a ersetzt, woran radial ausragende Messerklingen 29a angeordnet sind.

Die Messer 29a sind in ihrer Länge unterschiedlich und so bemessen, wie aus Fig. 3c in schematischer Darstellung ersichtlich, dass sie gemeinsam eine Schraubenfläche E definieren, koaxial zur Achse 27a, welche sich in angegebener Fliessrichtung bezüglich der Achse 27a um einen kleinen Winkel α im Bereich von 1° bis 2° aufweitet.

Die Messerschneiden sind, wie dargestellt, bei A durch bekanten in Fliessrichtung F gebildet, womit die Förderschneckenwirkung der Messer 29a unterstützt wird. Beim Drehen der Achse 27a, beispielsweise mit einem wie in Fig. 3a dargestellten Motor, bilden die dargestellten Messer 29a eine Förderspirale bzw. -schnecke.

Das Vorsehen dieser Anordnung an der ansonsten wie in Fig. 3a bzw. 3b dargestellten Einrichtung ermöglicht einen hohen Durchsatz feuchter Zellulosefaser-/Pulvermasse bzw. fertigen Granulates.

Bei der Ausbildung der Zerkleinerungsorgane als Klingen 29a kann die Achse 27a gegebenenfalls auch in der Trommel 21 zentral gelagert sein.

Eine weitere, bevorzugte Ausführungsform der schematisch in Fig. 1 dargestellten Granulierstufe ist in Fig. 4 dargestellt. Sie wird anstelle der in Fig. 3 beschriebenen eingesetzt.

Sie umfasst einen Presszylinder 39 mit einer Lochsiebanordnung 41 und einem Pressorgan, wie beispielsweise einer getriebenen Schnecke 43 mit Kreuzmesser 44. Die feuchte Masse von Mischer 1, bei Verwendung von Papier, vorzugsweise vom Zerfaserer, wird, wie bei q dargestellt, in den Presszylinder 39 eingeführt und mittels Schnecke 43 und Kreuzmesser 44 durch die Lochsiebanordnung 41 durchgepresst.

Ausgangsseitig ist ein hin und her getriebenes Trennmesser 45 vorgesehen, mit welchem die ausgepressten Würste noch feuchter Masse in zu granulierende Einzelteilchen portioniert werden. Diese fallen in einen Granulierteller 46 bekannter, z.B. von der Firma Beumer in Beckum (D) hergestellter und vertriebener Art, wie schematisch dargestellt, worin die Teilchen gerundet werden.

Darnach werden die gerundeten Granülen noch getrocknet.

Mit dem erfindungsgemässen Tierstreugranulat wird ein Produkt realisiert, welches ein vorzügliches Saugvermögen, eine gute Staubfreiheit und eine gute Geruchsbindung aufweist. Von der bevorzugten Ausführungsform mit Zeitungsaltpapier als Zellulosefasern und Kalzium-Silikat-Hydrat-Pulver als wesentlicher Anteil des beigefügten Pulvers abweichend, können, gegebenenfalls in Kombinationen, andere der erwähnten Pulver eingesetzt werden.

Mit dem erfindungsgemässen Verfahren bzw. der Anlage zur Herstellung eines solchen Granulates wird eine einfache und rationelle Möglichkeit geschaffen, grosse Mengen des erfindungsgemässen Granulates industriell zu fertigen.

## Patentansprüche

1. Verfahren zur Herstellung eines Granulats insbesondere Tierstreugranulats, bestehend aus miteinander verknitteten 40-60 Gew.% Zellulosefasern und 60-40 Gew.% eines mineralischen und/oder organischen Stoffes, wobei die Zellulosefasern, insbesondere Zeitungspapier, unter Zugabe von Wasser mit dem mineralischen und/oder organischen Stoff in Pulverform gemischt werden, wobei die Zellulose unter Zugabe des Wassers und des Pulvers zerfasert und gleichzeitig mit dem Pulver gemischt wird, dabei als überwiegender Pulveranteil Kalzium-Silikat-Hydratpulver oder Holzmehl verwendet wird, und dass die Teilchen der noch feuchten Masse durch zeitlich gesteuertes Hochfördern und Zurückfallenlassen gerundet und nur oberflächlich kompaktiert werden und die so gebildeten Granülen getrocknet werden.

2. Verfahren nach Anspruch 1, dadurch gekennzeichnet, dass dass das Pulver einen Blainewert von mindestens 1000 cm²/g aufweist.

3. Verfahren nach Anspruch 1 oder 2, dadurch gekennzeichnet, dass Bariumsulfatpulver mit den Fasern gemischt wird.

4. Verfahren nach einem der Ansprüche 1 bis 3, dadurch gekennzeichnet, dass der Masse ein Duft und/oder Desinfektionsmittel beigemischt wird.

5. Verfahren nach einem der Ansprüche 1 bis 4, dadurch gekennzeichnet, dass als Pulver Kalzium-Silikatpulver mit einem Blainewert von mindestens 1000 cm²/g verwendet wird, als Zellulosefasern zerfasertes Zeitungspapier, und dass zur Herstellung der Mischung pro Gewichtseinheit der feuchten Mischung 70% Wasser, 12 bis 18% Kalzium-Silikat-Hydrat-Pulver und, entsprechend, 18 bis 12% Zeitungspapier verwendet, allenfalls mit geringfügigen Abweichungen für Zusatzstoffe, wie Bariumsulfatpulver, einen Duftstoff oder ein Desinfektionsmittel.

6. Granulat, insbesondere Tierstreugranulat, hergestellt nach dem Verfahren gemäss einem der Ansprüche 1-5.

## Claims

1. Process for manufacturing a granule, in particular a granule for a litter, consisting of 40-60 % by weight of cellulose fibers and 60-40 % by weight of a mineral and/or organic substance, agglomerated together, in which the cellulose fibers, in particular newsprint paper, are mixed with the mineral and/or organic substance in powder form with addition of water, the cellulose with addition of water and of the powder is ground and simultaneously is mixed with the powder, wherein calcium silicate hydrate or a wood flour is used as major part of the powder and the particles of the yet humid mass is rounded and only superficially compacted by timely controlled rising and letting fall back and the so obtained granules are dried.

2. Process as claimed in claim 1 in which the powder has a Blaine value of at least 1000 cm²/g.

3. Process as claimed in claim 1 or 2, in which barium sulfate powder is mixed with fibers.

4. Process as claimed in one of claims 1 to 3, in which the mass is mixed with a perfume or a disinfectant.

5. Process as claimed in one of claims 1 to 4, in which calcium silicate powder with a Blaine value of at least 1000 cm²/g is used as powder, ground newsprint paper is used as cellulose fibers and for the manufacture of the mixture, per weight unit of humid mixture, 70 % of water, 12 to 18 % of calcium silicate hydrate powder and correspondingly 18 to 12 % of newsprint paper is used, and possibly with minor amounts of additives such as barium sulfate powder, a perfume or a disinfectant.

6. Granules, in particular granules for a litter, obtained by a process as claimed in one of claims 1-5.

## Revendications

1. Procédé de fabrication d'un granulat, en particulier un granulat pour litière, constitué de 40 à 60 % en poids de fibres de cellulose et 60 à 40 % en poids d'une substance minérale et/ou organique agglomérées ensemble, dans lequel les fibres de cellulose en particulier de papier journal sont mélangées avec la substance minérale et/ou organique sous forme de poudre avec addition d'eau, la cellulose avec addition d'eau et de la poudre est transformée en pâte et en même temps est mélangée à la poudre, de la poudre de silicate de calcium hydraté ou de la farine de bois étant utilisée comme partie prépondérante de la poudre, et les particules de la masse encore humide sont arrondies et compactées seulement superficiellement en les remontant et en les laissant retomber de façon commandée dans le temps, et les granulés ainsi formés sont séchés.

2. Procédé selon la revendications 1, caractérisé en ce que la poudre présente une valeur Blaine d'au moins 1 000 cm²/g.

3. Procédé selon la revendication 1 ou la revendication 2, caractérisé en ce que de la poudre de sulfate de baryum est mélangée avec les fibres.

4. Procédé selon l'une quelconque des revendications 1 à 3, caractérisé en ce que la masse est additionnée d'un parfum et/ou d'un désinfectant.

5. Procédé selon l'une quelconque des revendications 1 à 4, caractérisé en ce que l'on utilise comme poudre une poudre de silicate de calcium ayant une valeur Blaine d'au moins 1 000 cm²/g, comme fibres de cellulose du papier journal transformé en pâte, et pour la fabrication du mélange, on utilise, par unité de poids du mélange humide, 70 % d'eau, 12 à 18 % de poudre de silicate de calcium hydraté et de façon correspondante 18 à 12 % de papier journal, et à la rigueur de faibles quantités d'additifs tels que de la poudre de sulfate de baryum, un parfum ou un désinfectant.

6. Granulat, en particulier granulat pour litière, préparé par le procédé selon l'une des revendications 1 à 5.
